# EUROPEAN PATENT APPLICATION

(11) **EP 4 443 543 A1**
(43) Date of publication of application: **09.10.2024**
(21) Application number: 23209030.8
(22) Date of filing: 10.11.2023
(51) Int. Cl.: H01M 4/136, H01M 4/36

(54) **POSITIVE ELECTRODE ACTIVE MATERIAL, ELECTROCHEMICAL DEVICE AND ELECTRONIC APPARATUS**

(30) Priority: 07.04.2023 CN 202310370577
(71) Applicant: AESC Japan Ltd., Kanagawa, 2520012 (JP)
(72) Inventor: WU, Guanhong, Pudong New Area Shanghai, 201315 (CN); WANG, Wenxu, Pudong New Area Shanghai, 201315 (CN); SUN, Huayu, Pudong New Area Shanghai, 201315 (CN); YANG, Wenlong, Pudong New Area Shanghai, 201315 (CN); WANG, Yunhui, Pudong New Area Shanghai, 201315 (CN); MO, Fangjie, Pudong New Area Shanghai, 201315 (CN); LIU, Huyun, Pudong New Area Shanghai, 201315 (CN)
(74) Representative: Becker, Eberhard

(57) **Abstract**

A positive electrode active material, an electrochemical device, and an electronic apparatus are provided. The positive electrode active material includes a secondary particle. An inner side of the secondary particle includes first lithium manganese iron phosphate in a form of a primary particle, and an outer side of the secondary particle includes second lithium manganese iron phosphate in the form of the primary particle. A general chemical formula of the first lithium manganese iron phosphate is LiₓMnₐFe_{1-a-a'}M1_{a'}PO₄, 0.9≤x≤1.10, 0.4≤a≤0.9, and 0.001≤a'≤0.02, and a general chemical formula of the second lithium manganese iron phosphate in the form of the primary particle is Li_{y}Mn_{b}Fe_{1-b-b'}M2_{b'}PO₄, 0.9≤y≤1.10, 0<b≤0.6, and 0.001≤b'≤0.02, where a > b, M1 and M2 are each one or more of Mg, Ti, V, Ni, Co, and Al. An area ratio (S) of the first lithium manganese iron phosphate to the second lithium manganese iron phosphate satisfies S≥(0.4-b)/(a-0.4).

## Description

### BACKGROUND

### Technical Field

The disclosure relates to a positive electrode active material, an electrochemical device, and an electronic apparatus.

### Description of Related Art

Lithium iron phosphate has the advantages of good structural stability, good thermal stability, good safety performance, and good cycle life, and its raw materials are rich in sources. Therefore, the application of lithium iron phosphate in energy storage batteries and electric vehicle batteries is increasing. However, the plateau voltage of lithium iron phosphate is only 3.4V vs. Li/Li+, which limits its energy density. Lithium manganese phosphate has the same olivine structure as lithium iron phosphate. Compared to lithium iron phosphate, lithium manganese phosphate has a higher plateau voltage, but its migration rate of the intrinsic lithium ion solid phase is low and the charging polarization is large.

In the related art, the energy density and electrical conductivity of lithium manganese phosphate or lithium iron phosphate are improved mainly by partially doping iron on the manganese site of lithium manganese phosphate or partially replacing the manganese position of lithium manganese phosphate with iron. Nevertheless, the polarization problem caused by manganese is still serious. Further, during the charging and discharging process, the manganese in lithium iron phosphate is easy to precipitate, forms manganese fluoride on the surface of the positive electrode, or is dissolved in the electrolyte and precipitated on the negative electrode. This results in energy loss during battery cycling. Therefore, the preparation of a lithium manganese iron phosphate material with high capacity, low internal resistance, and good stability is of great significance to the research and development of electrochemical devices.

### SUMMARY

In view of the deficiencies in the related, the purpose of the disclosure is to provide a positive electrode active material, a positive electrode sheet, an electrochemical device, and an electronic apparatus. The positive electrode active material provided by the disclosure is beneficial to alleviating the dissolution of metal manganese during the cycle, so the cycle stability and energy density of the electrochemical device are further improved.

In order to solve the problems in the related art, the first aspect of the disclosure provides a positive electrode active material including a secondary particle. An inner side of the secondary particle includes a first lithium manganese iron phosphate in a form of a primary particle, and an outer side of the secondary particle includes a second lithium manganese iron phosphate in the form of the primary particle.

A general chemical formula of the first lithium manganese iron phosphate is LiₓMnₐFe₁-_{a-a'}M1_{a'}PO₄, 0.9≤x≤1.10, 0.4≤a≤0.9, and 0.001≤a'≤0.02, and a general chemical formula of the second lithium manganese iron phosphate in the form of the primary particle is Li_{y}Mn_{b}Fe_{1-b-b},M2_{b'}PO₄, 0.9≤y≤1.10, 0<b≤0.6, and 0.001≤b'≤0.02, where a > b, M1 and M2 are each one or more of Mg, Ti, V, Ni, Co, and Al. An area ratio of the first lithium manganese iron phosphate to the second lithium manganese iron phosphate satisfies S>(0.4-b)/(a-0.4), wherein S in the area ratio.

The second aspect of the disclosure provides a positive electrode sheet including the abovementioned positive electrode active material.

The third aspect of the disclosure provides an electrochemical device including the abovementioned positive electrode sheet.

The fourth aspect of the disclosure provides an electronic apparatus including the abovementioned electrochemical device.

The reagents and raw materials used in the disclosure are all commercially available.

The positive progress effects provided by the disclosure include the following.
(1) In the disclosure, the lithium manganese iron phosphate secondary particle with a special structure is used as the positive electrode active material. In the lithium manganese iron phosphate particle from the inside to the outside, the manganese element content gradient decreases, and the iron element content gradient increases. This is beneficial to alleviate the dissolution problem of metal manganese during the lithium manganese iron phosphate cycle. The internal resistance related to the interface can also be improved, the rate performance of the positive electrode active material is improved, and the energy density and cycle stability are enhanced.
(2) The structure of the secondary particle can prevent the electrolyte from entering the inside of the particle, so the cycle stability inside the particle is improved. The inner side is a gradient of manganese-rich lithium manganese iron phosphate in the form of the primary particle, and the outer side is the gradient of manganese-poor lithium manganese iron phosphate in the form of the primary particle, so that the positive electrode has fewer interface side reactions during the cycle, and the dissolution rate of Mn is slower. Therefore, the cycle and storage performance are significantly improved.

### BRIEF DESCRIPTION OF THE DRAWINGS

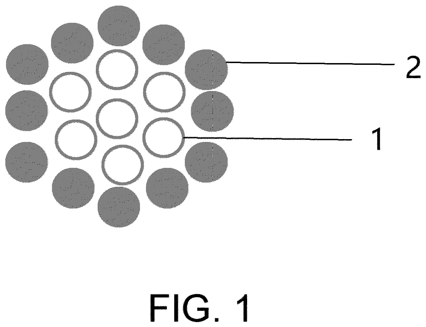

FIG. 1 is a schematic structural diagram of a positive electrode active material (where the reference number 1 is a first lithium manganese iron phosphate in a form of a primary particle, and the reference number 2 is a second lithium manganese iron phosphate in the form of the primary particle).

### DESCRIPTION OF THE EMBODIMENTS

The disclosure will be further described in the following paragraphs together with the examples, but the disclosure is not limited to the scope of the examples. For the experimental methods that do not specify specific conditions in the following examples, selection is made according to conventional methods and conditions or according to the product instructions.

### Positive Electrode Active Material

The disclosure provides a positive electrode active material including a secondary particle. An inner side of the secondary particle includes a first lithium manganese iron phosphate in a form of a primary particle, and an outer side of the secondary particle includes a second lithium manganese iron phosphate in the form of the primary particle.

A general chemical formula of the first lithium manganese iron phosphate is LiₓMnₐFe_{1-a-a'}M1_{a'}PO₄, 0.9≤x≤1.10, 0.4≤a≤0.9, and 0.001≤a'≤0.02, and a general chemical formula of the second lithium manganese iron phosphate in the form of the primary particle is Li_{y}Mn_{b}Fe_{1-b-b'}M2_{b'}PO₄, 0.9≤y≤1.10, 0<b≤0.6, and 0.001≤b'≤0.02, where a>b, M1 and M2 are each one or more of Mg, Ti, V, Ni, Co, and Al. An area ratio of the first lithium manganese iron phosphate to the second lithium manganese iron phosphate satisfies S>(0.4-b)/(a-0.4), wherein S in the area ratio.

In order to overcome the energy loss caused by the easy dissolution of manganese during the charging and discharging process of a battery in the related art, through extensive research, the disclosure finds that the energy density and cycle performance of a positive electrode material may be improved by regulating the area ratio of the first lithium manganese iron phosphate and the second lithium manganese iron phosphate. When the area ratio satisfies specific conditions, its electrical properties are more favorable.

In the disclosure, the area ratio refers to the cross-sectional area ratio of the first lithium manganese iron phosphate and the second lithium manganese iron phosphate in the CPSEM.

In the disclosure, the secondary particle is formed by agglomerating the primary particles.

In the disclosure, a mass ratio range of the first lithium manganese iron phosphate to the second lithium manganese iron phosphate may be (0.4-36.5): 1.

In some embodiments, the mass ratio range of the first lithium manganese iron phosphate and the second lithium manganese iron phosphate may be 0.4:1, 1:1, 4.4:1, 11.2:1, 31.6:1, or 36.5 :1.

In some embodiments, in the general chemical formula of the first lithium manganese iron phosphate, a value range of a is: 0.6≤a≤0.8.

In some embodiments, in the general chemical formula of the second lithium manganese iron phosphate, a value range of b is: 0 < b < 0.4.

In some embodiments, in the general chemical formula of the second lithium manganese iron phosphate, the value range of b is: 0.2≤b < 0.4.

The first lithium manganese iron phosphate is manganese-rich lithium manganese iron phosphate. When a Mn content is excessively low, a Mn plateau potential cannot be exerted, resulting in low energy density, and when it is excessively high, the conductivity of LMFP is poor and the capacity is low, resulting in low energy density. The second lithium manganese iron phosphate is manganese-poor lithium manganese iron phosphate. When the Mn content is excessively low, the Mn plateau potential cannot be exerted, resulting in low energy density, and when it is excessively high, the external Mn dissolution is serious, resulting in poor cycle performance.

In some embodiments, the area ratio of the first lithium manganese iron phosphate to the second lithium manganese iron phosphate satisfies the following: when 0 < b < 0.55 and 0.75 < a≤0.9, (0.55-b)/(a-0.55)≤S≤(0.75-b)/(a-0.75), wherein S in the area ratio.

In some embodiments, the area ratio of the first lithium manganese iron phosphate to the second lithium manganese iron phosphate satisfies the following: when 0 < b < 0.5 and 0.5 < a≤0.9, S≥(0.5-b)/(a-0.5), wherein S in the area ratio.

In some embodiments, the area ratio of the first lithium manganese iron phosphate to the second lithium manganese iron phosphate satisfies b/a≤S≤30b/a, preferably satisfies 7b/3a≤S≤15b/a, wherein S in the area ratio.

In some other embodiments, the area ratio of the first lithium manganese iron phosphate to the second lithium manganese iron phosphate is preferably [(0.4-b)/(a-0.4)] ≦ S ≦ [(0.7-b)/(a-0.7)] when 0<b<0.4 and a>0.7, wherein S in the area ratio.

In some other embodiments, the area ratio of the first lithium manganese iron phosphate to the second lithium manganese iron phosphate is preferably [(0.5-b)/(a-0.5)]≤S≤[(0.7-b)/(a-0.7)] when 0 < b < 0.5 and a>0.7, wherein S in the area ratio.

In the disclosure, the secondary particle is obtained by agglomerating the primary particles. There are manganese-rich particles and manganese-poor particles in the primary particles. During agglomeration, manganese-poor particles are distributed on the outside, and manganese-rich particles are distributed on the inside, forming the secondary particle with poor manganese content on the outside and rich manganese content on the inside.

In the disclosure, in CPSEM, the number of primary particles of the secondary particle is 10 particles/µm² to 30 particles/µm².

In some specific embodiments, the number of primary particles of the secondary particle in CPSEM is 20 particles/µm².

Preferably, a surface of the primary particle is further coated with carbon.

Herein, the coating amount of the carbon is 1% to 3%, and percentage in the coating amount is a percentage of a mass of the carbon in a mass of the primary particle.

In some specific embodiments, the coating amounts of carbon of the first lithium manganese iron phosphate and the second lithium manganese iron phosphate are both 1.8%.

In the disclosure, the preparation method of the secondary particle preferably includes the following steps.
(1) Synthesis of a first lithium manganese iron phosphate precursor (MFP1): Manganous nitrate and ferric nitrate are dissolved in ethanol at a specific molar ratio, and then the ethanol solution of the metal salt is poured into phosphoric acid solution, stirred and reacted at 40°C for 4 hours, filtered, and washed to obtain MFP1.
(2) A raw material solution of a second lithium manganese iron phosphate precursor (MFP2) is mixed with MFP1, and ammonia water is added to control pH = 2, stirred and reacted at 50°C, filtered, and calcined at 550°C in air for 1 hour to obtain MFP1@MFP2.
(3) MFP1@MFP2 is mixed with a lithium source, a carbon source, and a doped metal source, wet-ground with water as the medium, spray-dried, and calcined at 650°C for 15 hours to obtain a product.

In step (1), the molar ratio of the manganous nitrate to the ferric nitrate may be a: (1-a-a'), where 0.4≤a≤0.9 and 0.001≤a'≤0.02.

In step (2), the raw material solution of MFP2 is obtained by mixing manganous nitrate, ferric nitrate, and phosphoric acid at a specific molar ratio and dissolving them in water. Preferably, the molar ratio of the manganous nitrate, the ferric nitrate, and the phosphoric acid may be b: (1-b-b'): 1, where 0<b<0.6 and 0.001≤b'≤0.02.

In step (3), the molar ratio of the lithium source to MFP1@MFP2 may be 1.05: 1.

In step (3), the added amount of the carbon source may be 6% to 12% of the total mass of the lithium source and MFP1@MFP2.

### Positive Electrode Sheet

The second aspect of the disclosure provides a positive electrode sheet including the abovementioned positive electrode active material.

The positive electrode sheet generally includes a positive electrode active material, a conductive agent, a binder, and a positive electrode current collector. The types of the conductive agent and the binder are not specifically limited in the disclosure and may be selected according to actual needs.

As an example, the conductive agent may be conductive carbon black (SP).

The binder may be polyvinylidene fluoride (PVDF).

Preferably, the mass ratio of the positive electrode active material, the conductive agent, and the binder is (90 to 99): 1: 2, for example, it may be 97: 1.5: 1.5.

### Electrochemical Device

The third aspect of the disclosure provides an electrochemical device including the abovementioned positive electrode sheet.

In the disclosure, the electrochemical device may be a battery. The battery includes a positive electrode sheet, a negative electrode sheet opposite to the positive electrode sheet, a separator arranged between the positive electrode sheet and the negative electrode sheet, and an electrolyte. The positive electrode sheet is as described above. Further, the battery may also optionally include a battery casing for accommodating the positive electrode sheet, the negative electrode sheet, and the separator, as well as a sealing member for sealing the battery casing.

### Negative Electrode Sheet

In a battery, the negative electrode sheet includes a negative electrode current collector and a negative electrode active material layer formed on the negative electrode current collector. The negative electrode active material layer includes a negative electrode active material and an optional binder and a conductive agent, and the addition amount may be adjusted within 1% to 50% of the total amount of the negative electrode active material layer according to different needs.

The negative electrode active material described in the disclosure is a material capable of intercalating and deintercalating lithium. The negative active material includes but not limited to a carbon material such as crystalline carbon (natural graphite and artificial graphite), amorphous carbon, carbon-coated graphite, and resin-coated graphite, an oxide material such as indium oxide, silicon oxide, tin oxide, lithium titanate, zinc oxide, and lithium oxide, or lithium metal or a metal material that capable of forming an alloy with lithium. Herein, the metal material capable of forming an alloy with lithium is, for example, Cu, Sn, Si, Co, Mn, Fe, Sb, and Ag. Binary or ternary alloys containing these metals and lithium may also be used as the negative electrode active materials. These negative electrode active materials may be used alone or in combination of two or more. From the viewpoint of increasing energy density, carbon materials such as graphite may be used in combination with Si-based materials such as Si, Si alloys, and Si oxides.

Herein, the conductive agent is a reagent used to ensure that the electrode exhibits good charging and discharging performance. The conductive agent may be, for example, a graphite material such as natural graphite and artificial graphite, a carbon black material such as carbon black, acetylene black, Ketjen black, channel black, furnace black, lamp black, and thermal black, a conductive fiber such as a carbon fiber and a metal fiber, metal powder such as carbon fluoride powder, aluminum powder, and nickel powder, a conductive whisker such as metal powder, zinc oxide, and potassium titanate, and a conductive metal oxide such as titanium dioxide or a polyphenylene derivative.

Herein, the binder is a component that facilitates the bonding between an active substance and the conductive agent and facilitates the bonding of the active substance and the current collector. The binder may generally be selected from polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butadiene rubber, fluororubber, and various copolymers.

Herein, the negative electrode current collector, as a base material supporting the electrode active material, is usually a metal foil with a thickness of 3 microns to 500 microns. There is no particular limitation on the material of the current collector, as long as the material has high electrical conductivity and does not produce chemical reactions in the system of the secondary battery. For example, the material may be a foil material obtained by surface-treating nickel, titanium, aluminum, nickel, silver, stainless steel, carbon, or the like. The negative electrode current collector usually has a smooth surface, but fine lines can also be formed on its surface to improve the adhesion between the positive electrode active material and the current collector. In addition to foil, the negative electrode current collector may also adopt any one or a combination of various forms such as film, mesh, porous, foam, or non-woven fabric.

### Separator

The separator arranged between the positive electrode sheet and the negative electrode sheet uses an insulating film with high ion permeability and high mechanical strength most of the time. The separator typically has a thickness of 9 µm to 18 µm, a pore size of 5 µm to 300 µm, an air permeability of 180 s/100mL to 380 s/100mL, and a porosity of 30% to 50%. As a separator, a sheet or non-woven fabric made of an olefin polymer such as polypropylene and glass fiber or polyethylene, which is chemically resistant and hydrophobic, is used.

### Electrolyte

The electrolyte used in the lithium-ion battery prepared in the above paragraphs usually includes a non-aqueous solvent, lithium salt, and an additive.

Herein, the non-aqueous solvent may be a conventional non-aqueous solvent in the art, preferably an ester solvent, more preferably a carbonate solvent. Herein, the carbonate solvent may preferably be selected from one or more of ethylene carbonate, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethyl methyl carbonate (EMC), ethylene carbonate (EC), propylene carbonate (PC), and butylene carbonate (BC).

Herein, the lithium salt may be selected from at least one of LiPF₆, LiBF₄, LiN(SO₂F)₂ (abbreviated as LiFSI), LiClO₄, LiAsF₆, LiB(C₂O₄)₂ (abbreviated as LiBOB), LiBF₂(C₂O₄) (abbreviated as LiDFOB), LiN(SO₂RF)₂, and LiN(SO₂F)(SO₂RF), for example. Preferably, the content of the lithium salt in the electrolyte is 5% to 20%.

Herein, the additive may be preferably selected from one or more of vinylene carbonate (VC), fluoroethylene carbonate (FEC), vinylethylene carbonate (VEC), vinyl sulfate (DTD), vinylene sulfate, 1,3-propane sultone (PS), propene sultone, and 1,4-butane sultone. The typical amount of the additive used in the electrolyte is 1% to 4% of the electrolyte, such as 2% of the electrolyte.

There is no particular limitation on the shape of the battery in the disclosure, and the shape may be cylindrical, square, or any other shapes.

### Electronic Apparatus

The electronic apparatus in the disclosure includes the electrochemical device according to the third aspect.

Exemplarily, the electronic apparatus in the disclosure may be, but not limited to, a mobile apparatus (e.g., a mobile phone, a tablet computer, a notebook computer, a video recorder, a portable printer/copier, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric locomotive, a ship, a satellite, an energy storage system, a backup power source, and the like.

On the basis of conforming to common knowledge in the art, the abovementioned preferred conditions may be combined arbitrarily to obtain the preferred embodiments of the disclosure.

### Example 1

### (1) Preparation of Positive Electrode Sheet

A positive electrode active material, Super P, and PVDF were mixed in a mass ratio of 97:1.5:1.5. The positive electrode active material included secondary particles LiMn_{0.75}Fe_{0.25}PO₄@C and LiMn_{0.25}Fe_{0.75}PO₄@C, and S=2.7. The coating amounts of carbon of the first lithium manganese iron phosphate and the second lithium manganese iron phosphate were both 1.5%. Nitrogen methyl pyrrolidone (NMP) was then gradually added with high-speed stirring to prepare a positive electrode slurry with a certain viscosity. The prepared slurry was then uniformly coated on an aluminum foil and dried in a blast drying oven at 120°C for 10 minutes. Finally, the dried electrode sheet was rolled, cut, and made into a positive electrode sheet. Herein, the structure of the positive electrode active material is shown in FIG. 1.

### (2) Preparation of Negative Electrode Sheet

Negative electrode active material graphite, conductive agent acetylene black, thickener sodium carboxymethyl cellulose, and binder styrene-butadiene rubber were mixed at a mass ratio of 97:1:1:1, and deionized water was added to obtain a negative electrode slurry under the action of a vacuum mixer. The negative electrode slurry was uniformly coated on a copper foil current collector with a thickness of 8 µm, dried at room temperature, transferred to an oven for drying, and then subjected to cold pressing and slitting to obtain a negative electrode sheet.

### (3) Preparation of Electrolyte

An organic solvent was a mixture of ethylene carbonate (EC), ethyl methyl carbonate (EMC), and dimethyl carbonate (DMC), where a volume ratio of EC, DMC, and EMC is 3:3.5:3.5. In an argon atmosphere glove box with a water content of smaller than 10ppm, fully dried lithium salts (LiPF₆) were dissolved in the above organic solvents and mixed uniformly to obtain an electrolyte solution in which the concentration of LiPF₆ was 1 mol/L.

### (4) Preparation of Separator

A 12 µm thick polypropylene separator was selected.

### (5) Preparation of Battery

The above-obtained positive electrode sheet, the separator, and the artificial graphite negative electrode sheet were sequentially stacked in a way that the separator was placed between the positive and negative electrode sheets for isolation. It was then covered with aluminum-plastic film, transferred to a vacuum oven at 120°C to dry, and sealed after injecting 3.0 g/Ah of electrolyte. After standing still, hot and cold pressing, formation of 4.5V, fixture, grading, and other processes, a pouch battery (i.e., a lithium-ion battery) with a capacity of 1 Ah was finally obtained.

The parameter settings of Examples 2 to 22 and Comparative Examples 1 to 3 are as described in Table 1.

### Comparative Example 2

Physical mixing of LiMn_{0.75}Fe_{0.245}Ti_{0.005}PO₄@C and LiMn_{0.25}Fe_{0.745}Ti_{0.005}PO₄@C was performed only.

### Effect Example

(1) Testing of area ratio (S) of first lithium manganese iron phosphate to second lithium manganese iron phosphate: The electrode sheet was cut by CP, and SEM and EDS were photographed, the first lithium manganese iron phosphate and the second lithium manganese iron phosphate in the form of primary particles in the secondary particles were confirmed in the SEM image and the EDS image, and then the particle area was counted by Image J.
(2) Energy density testing: Charging and discharging (charging cut-off current 0.05C) was carried out at 25°C, 0.33C, and 2.5V to 4.2V, and the discharging energy divided by the mass of the positive active material was its energy density.
(3) Cycle testing: In the range of 2.5V to 4.2V, 500 cycles charging and discharging at 1C at 45°C were carried out, and the capacity ratio of the 500^{th} cycle to the 1^{st} cycle was recorded as the capacity retention rate.

**Table 1**

| | Inner side | | Outer side | | | |
|---|---|---|---|---|---|---|
| | Type | Coating amount of carbon | Type | Coating amount of carbon | Number of primary particles piece/µm² | Mass ratio |
| Example 1 | LiMn_{0.75}Fe_{0.245} Ti_{0.005}PO₄@C | 1.8% | LiMn_{0.25}Fe_{0.745} Ti_{0.005}PO₄@C | 1.8% | 20 | 4.4 |
| Example 2 | LiMn_{0.8}Fe_{0.195} Ti_{0.005}PO₄@C | 1.8% | LiMn_{0.25}Fe_{0.745} Ti_{0.005}PO₄@C | 1.8% | 20 | 4.4 |
| Example 3 | LiMn_{0.6}Fe_{0.345} Ti_{0.005}PO₄@C | 1.8% | LiMn_{0.25}Fe_{0.745} Ti_{0.005}PO₄@C | 1.8% | 20 | 4.4 |
| Example 4 | LiMn_{0.5}Fe_{0.345} Ti_{0.005}PO₄@C | 1.8% | LiMn_{0.25}Fe_{0.745} Ti_{0.005}PO₄@C | 1.8% | 20 | 4.4 |
| Example 5 | LiMn_{0.9}Fe_{0.095} Ti_{0.005}PO₄@C | 1.8% | LiMn_{0.25}Fe_{0.745} Ti_{0.005}PO₄@C | 1.8% | 20 | 4.4 |
| Example 6 | LiMn_{0.75}Fe_{0.245} Ti_{0.005}PO₄@C | 1.8% | LiMn_{0.2}Fe_{0.795} Ti_{0.005}PO₄@C | 1.8% | 20 | 4.4 |
| Example 7 | LiMn_{0.75}Fe_{0.245} Ti_{0.005}PO₄@C | 1.8% | LiMn_{0.4}Fe_{0.595} Ti_{0.005}PO₄@C | 1.8% | 20 | 4.4 |
| Example 8 | LiMn_{0.75}Fe_{0.245} Ti_{0.005}PO₄@C | 1.8% | LiMn_{0.1}Fe_{0.895} Ti_{0.005}PO₄@C | 1.8% | 20 | 4.4 |
| Example 9 | LiMn_{0.75}Fe_{0.245} Ti_{0.005}PO₄@C | 1.8% | LiMn_{0.5}Fe_{0.495} Ti_{0.005}PO₄@C | 1.8% | 20 | 4.4 |
| Example 10 | LiMn_{0.75}Fe_{0.245} Ti_{0.005}PO₄@C | 1.8% | LiMn_{0.6}Fe_{0.395} Ti_{0.005}PO₄@C | 1.8% | 20 | 4.4 |
| Example 11 | LiMn_{0.75}Fe_{0.245} Ti_{0.005}PO₄@C | 1.8% | LiMn_{0.25}Fe_{0.745} Ti_{0.005}PO₄@C | 1.8% | 20 | 1 |
| Example 12 | LiMn_{0.75}Fe_{0.245} Ti_{0.005}PO₄@C | 1.8% | LiMn_{0.25}Fe_{0.745} Ti_{0.005}PO₄@C | 1.8% | 20 | 11.2 |
| Example 13 | LiMn_{0.75}Fe_{0.245} Ti_{0.005}PO₄@C | 1.8% | LiMn_{0.25}Fe_{0.745} Ti_{0.005}PO₄@C | 1.8% | 20 | 0.4 |
| Example 14 | LiMn_{0.75}Fe_{0.245} Ti_{0.005}PO₄@C | 1.8% | LiMn_{0.25}Fe_{0.745} Ti_{0.005}PO₄@C | 1.8% | 20 | 27 |
| Example 15 | LiMn_{0.75}Fe_{0.245} Ti_{0.005}PO₄@C | 1.8% | LiMn_{0.25}Fe_{0.745} Ti_{0.005}PO₄@C | 1.8% | 20 | 31.6 |
| Example 16 | LiMn_{0.75}Fe_{0.245} Ti_{0.005}PO₄@C | 1.8% | LiMn_{0.25}Fe_{0.745} Ti_{0.005}PO₄@C | 1.8% | 20 | 36.5 |
| Comparative Example 1 | LiMn_{0.62}Fe_{0.375} Ti_{0.005}PO₄@C | 1.8% | / | / | 20 | / |
| Comparative Example 2 | LiMn_{0.75}Fe_{0.245} Ti_{0.005}PO₄@C+ LiMn_{0.25}Fe_{0.745} Ti_{0.005}PO₄@C | 1.8% | / | / | 20 | / |
| Comparative Example 3 | LiMn_{0.25}Fe_{0.745} Ti_{0.005}PO₄@C | 1.8% | LiMn_{0.75}Fe_{0.245} Ti_{0.005}PO₄@C | 1.8% | 20 | 4.4 |
| Comparative Example 4 | LiMn_{0.3}Fe_{0.695} Ti_{0.005}PO₄@C | 1.8% | LiMn_{0.25}Fe_{0.745} Ti_{0.005}PO₄@C | 1.8% | 20 | 4.4 |
| Comparative Example 5 | LiMn_{0.9}1Fe_{0.085} Ti_{0.005}PO₄@C | 1.8% | LiMn_{0.25}Fe_{0.745} Ti_{0.005}PO₄@C | 1.8% | 20 | 4.4 |
| Comparative Example 6 | LiMn_{0.75}Fe_{0.245} Ti_{0.005}PO₄@C | 1.8% | LiFe_{0.995}Ti_{0.005} PO₄@C | 1.8% | 20 | 4.4 |
| Comparative Example 7 | LiMn_{0.41}Fe_{0.585} Ti_{0.005}PO₄@C | 1.8% | LiMn_{0.25}Fe_{0.745} Ti_{0.005}PO₄@C | 1.8% | 20 | 4.4 |
| Comparative Example 8 | LiMn_{0.75}Fe_{0.245} Ti_{0.005}PO₄@C | 1.8% | LiMn_{0.25}Fe_{0,745} Ti_{0.005}PO₄@C | 1.8% | 20 | 0.3 |
| Comparative Example 9 | LiMn_{0.75}Fe_{0.245} Ti_{0.005}PO₄@C | 1.8% | LiMn_{0.25}Fe_{0.745} Ti_{0.005}PO₄@C | 1.8% | 20 | 0.2 |
| Comparative Example 10 | LiMn_{0.75}Fe_{0.245} Ti_{0.005}PO₄@C | 1.8% | LiMn_{0.6}Fe_{0.295} Ti_{0.005}PO₄@C | 1.8% | 20 | 4.4 |

**Table 2**

| | S | (0.4-b)/(a-0.4) | b/a | Energy density (Wh/kg) | Cycle Performance |
|---|---|---|---|---|---|
| Example 1 | 2.70 | 0.43 | 0.33 | 480 | 93.8% |
| Example 2 | 2.70 | 0.38 | 0.31 | 483 | 93.5% |
| Example 3 | 2.70 | 0.75 | 0.42 | 470 | 94.1% |
| Example 4 | 2.70 | 1.50 | 0.50 | 463 | 94.2% |
| Example 5 | 2.70 | 0.30 | 0.28 | 461 | 93.0% |
| Example 6 | 2.70 | 0.57 | 0.27 | 478 | 93.9% |
| Example 7 | 2.70 | 0.00 | 0.53 | 485 | 93.6% |
| Example 8 | 2.70 | 0.86 | 0.13 | 464 | 93.9% |
| Example 9 | 2.70 | -0.29 | 0.67 | 485 | 92.6% |
| Example 10 | 2.70 | -0.57 | 0.80 | 489 | 92.1% |
| Example 11 | 1.00 | 0.43 | 0.33 | 472 | 94.2% |
| Example 12 | 5.00 | 0.43 | 0.33 | 485 | 93.6% |
| Example 13 | 0.5 | 0.43 | 0.33 | 463 | 93.9% |
| Example 14 | 9.00 | 0.43 | 0.33 | 475 | 92.6% |
| Example 15 | 10.00 | 0.43 | 0.33 | 478 | 92.1% |
| Example 16 | 11.00 | 0.43 | 0.33 | 472 | 91.5% |
| Comparative Example 1 | \ | \ | \ | 470 | 90.1% |
| Comparative Example 2 | \ | \ | \ | 478 | 88.4% |
| Comparative Example 3 | 2.70 | 2.33 | 3.00 | 477 | 86.5% |
| Comparative Example 4 | 2.70 | -1.50 | 0.83 | 443 | 94.2% |
| Comparative Example 5 | 2.70 | 0.29 | 0.27 | 453 | 92.6% |
| Comparative Example 6 | 2.70 | 1.14 | 0.00 | 453 | 94.0% |
| Comparative Example 7 | 2.70 | 15.00 | 0.61 | 458 | 94.3% |
| Comparative Example 8 | 0.4 | 0.43 | 0.33 | 460 | 94.0% |
| Comparative Example 9 | 0.3 | 0.43 | 0.33 | 453 | 94.0% |
| Comparative Example 10 | 2.7 | -0.57 | 0.8 | 474 | 88.8% |

It can be seen from the data in Table 2 that when the positive electrode active materials of Examples 1 to 16 are applied to batteries, the energy densities are all above 461 Wh/kg, and the capacity retention rates of 500 cycles of charging and discharging at 1C are above 91.5%, so good electrochemical performance is provided.

Compared to the Examples, there is only the first lithium manganese iron phosphate in the Comparative Example 1, and there is no gradient change of the manganese element, so it can be seen that the effect of the cycle performance is poor. This is because the Mn dissolution phenomenon in lithium manganese iron phosphate can be alleviated when there is a gradient structure with manganese-rich inside and manganese-poor outside. Since Comparative Example 1 does not have such a structure, its cycle performance is poor.

Compared to Example 1, although the same positive electrode active material is provided in Comparative Example 2, it is a particle formed by physical mixing of two positive electrode active materials and does not form a gradient change of manganese element, so the phenomenon of Mn dissolution cannot be alleviated, and its cycle performance is relatively poor.

The values of a and b in Comparative Example 3 are not within the scope of the disclosure and are just opposite to the manganese concentration of the disclosure, and the structure is manganese-rich on the outside and manganese-poor on the inside. Its active substance determines that it has a higher energy density, but since it does not have the structure as provided in the disclosure, the Mn dissolution phenomenon cannot be alleviated. Its cycle performance is far worse than that of the Examples.

Comparative Examples 4 to 6 illustrate that when the value of a or b is excessively high or excessively low, although the impact on the cycle performance is not obvious, it can affect the energy density to a certain extent. Because the electrical properties are particularly poor when the Mn content in lithium manganese iron phosphate is larger than or equal to 0.9, the energy density of Comparative Example 5 is poor. Within a specific range, the higher the Mn content, the higher the energy density. In Comparative Examples 4 to 6, the overall Mn content is lower, so the energy density is lower.

In Comparative Examples 7 to 9, the area ratios (S) are all less than (0.4-b)/(a-0.4), and the energy density is low. This is because when the area ratio (S) of the first lithium manganese iron phosphate to the second lithium manganese iron phosphate < this formula, the Mn content is less than the expected range, so the energy density is low. The content of iron in the second lithium manganese iron phosphate of Comparative Example 10 is not within the scope as provided in the disclosure, and its cycle performance is poor.

In addition, it should be noted that each specific technical feature described in the abovementioned specific implementation manner may be combined in any suitable manner under the circumstance that there is no contradiction. In order to avoid unnecessary repetition, various possible combinations are not described in the disclosure.

## Claims

1. A positive electrode active material, comprising a secondary particle, wherein an inner side of the secondary particle comprises a first lithium manganese iron phosphate (1) in a form of a primary particle, and an outer side of the secondary particle comprises a second lithium manganese iron phosphate (2) in the form of the primary particle,
a general chemical formula of the first lithium manganese iron phosphate (1) is LiₓMnₐFe_{1-a-a'}M1_{a'}PO₄, 0.9≤x≤1.10, 0.4≤a≤0.9, and 0.001≤a'≤0.02, and a general chemical formula of the second lithium manganese iron phosphate (2) in the form of the primary particle is Li_{y}Mn_{b}Fe_{1-b-b'}M2_{b'}PO₄, 0.9≤y≤1.10, 0<b≤0.6, and 0.001≤b'≤0.02, where a > b, M1 and M2 are each one or more of Mg, Ti, V, Ni, Co, and Al, and an area ratio of the first lithium manganese iron phosphate (1) to the second lithium manganese iron phosphate (2) satisfies S≥(0.4-b)/(a-0.4), wherein S is the area ratio.

2. The positive electrode active material according to claim 1, wherein the positive electrode active material satisfies at least one of the following conditions (a) to (b):
(a) in the general chemical formula of the first lithium manganese iron phosphate (1), a value range of a is: 0.6≤a≤0.8, and
(b) in the general chemical formula of the second lithium manganese iron phosphate (2), a value range of b is: 0 < b < 0.4.

3. The positive electrode active material according to claim 1, wherein the area ratio of the first lithium manganese iron phosphate (1) to the second lithium manganese iron phosphate (2) satisfies b/a≤S≤30b/a.

4. The positive electrode active material according to claim 1, wherein the area ratio of the first lithium manganese iron phosphate (1) to the second lithium manganese iron phosphate (2) satisfies the following: when 0 < b < 0.55 and 0.75 < a≤0.9, (0.55-b)/(a-0.55)≤S≤(0.75-b)/(a-0.75).

5. The positive electrode active material according to claim 1, wherein the area ratio of the first lithium manganese iron phosphate (1) to the second lithium manganese iron phosphate (2) satisfies: when 0 < b < 0.5 and 0.5 < a≤0.9, S≥(0.5-b)/(a-0.5).

6. The positive electrode active material according to claim 1, wherein when 0 < b < 0.4 and a>0.7, the area ratio of the first lithium manganese iron phosphate (1) to the second lithium manganese iron phosphate (2) is (0.4-b)/(a-0.4)≤S≤(0.7-b)/(a-0.7).

7. The positive electrode active material according to claim 1, wherein a surface of the primary particle is coated with carbon; a coating amount of the carbon is 1% to 3%, and a percentage in the coating amount is a percentage of a mass of the carbon in a mass of the primary particle.

8. An electrochemical device, comprising a positive electrode sheet, a negative electrode sheet, and a separator, wherein the positive electrode sheet comprises the positive electrode active material according to any one of claims 1 to 7.

9. An electronic apparatus, comprising the electrochemical device according to claim 8.
